# EUROPÄISCHE PATENTSCHRIFT

(11) **EP 4 146 386 B1**
(45) Veröffentlichungstag und Bekanntmachung des Hinweises auf die Patenterteilung: **02.12.2026**
(21) Anmeldenummer: 21722912.9
(22) Anmeldetag: 06.05.2021
(51) Int. Cl.: B01J 23/44, B01D 53/94

(54) **OXIDATIONSKATALYSATOR MIT PHOSPORFAENGER**
OXIDATION CATALYST WITH PHOSPHORUS CATCHER
CATALYSEUR D'OXYDATION POURVU DE FIXATEUR DE PHOSPHORE

(30) Priorität: 06.05.2020 EP 20173091
(43) Veröffentlichungstag der Anmeldung: 15.03.2023
(73) Patentinhaber: Umicore AG & Co. KG, 63457 Hanau-Wolfgang (DE)
(72) Erfinder: FRIEDRICH, Birgit, 64853 Otzberg (DE)
(86) Internationale Anmeldenummer: PCT/EP2021/061931
(87) Internationale Veröffentlichungsnummer: WO 2021/224362

(56) Entgegenhaltungen:
- EP-A1- 2 651 540
- WO-A1-2017/093720
- WO-A1-2020/058265

## Beschreibung

Die vorliegende Erfindung betrifft einen Oxidationskatalysator zur Reinigung der Abgase von Dieselmotoren, der einen Phosphorfänger umfasst.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während zur Entfernung der Partikelemissionen Dieselpartikelfilter mit und ohne katalytisch aktive Beschichtung geeignet sind und Stickoxide beispielsweise durch selektive katalytische Reduktion (Selective Catalytic Reduction SCR) an einem sogenannten SCR-Katalysator zu Stickstoff umgesetzt werden können, werden Kohlenmonoxid und Kohlenwasserstoffe durch Oxidation an einem geeigneten Oxidationskatalysator unschädlich gemacht.

Oxidationskatalysatoren sind in der Literatur umfangreich beschrieben. Es handelt sich dabei beispielsweise um sogenannte Durchflusssubstrate aus Keramik oder Metall, die als wesentliche katalytisch aktive Bestandteile Edelmetalle, wie Platin und Palladium, auf hochoberflächigen, porösen, hochschmelzenden Oxiden, beispielsweise Aluminiumoxid, tragen.

Es sind auch bereits zonierte Oxidationskatalysatoren beschrieben, die in Fließrichtung des Abgases Materialzonen unterschiedlicher Zusammensetzung aufweisen, mit denen das Abgas nacheinander in Kontakt tritt.

So beschreiben US2010/257843, US2011/099975 und WO2012/079598 A1 zonierte Oxidationskatalysatoren, die Platin und Palladium enthalten.

Das Abgas von Dieselmotoren umfasst neben den bereits genannten Komponenten häufig auch aus Öladditiven stammende Phosphorverbindungen. Diese lagern sich auf dem Dieseloxidationskatalysator ab und verschlechtern über die Laufzeit seine Oxidationsfähigkeit.

In der Literatur sind dieses Problem, sowie Möglichkeiten zu seiner Lösung bereits beschrieben.

So offenbart die JP 2015066516A einen Dreiwege-katalysator, der in seiner obersten Schicht ein Kompositoxid aus Magnesium und Cer als Phosphorfänger enthält.

Die JP2013146706A lehrt einen zweischichtigen Katalysator, wobei die untere Schicht Edelmetall und die obere Schicht kein oder weniger Edelmetall als die untere Schicht enthält und wobei die obere Schicht eine höhere Porosität als die untere aufweist.

WO2017/093720A1 beschreibt einen Oxidationskatalysator, der ein Fängermaterial für Phosphor und/oder Schwefel umfaßt. Dieses kann als Schicht oder eigene Zone ausgebildet sein. Die erforderliche Morphologie der Materialzone mit Fängermaterial, wie Porosität und Porengröße, wurden jedoch nicht betrachtet, noch wurde auf die Edelmetallaufteilung auf die 20 Materialzonen geachtet.

WO2020/058265A1 beschreibt einen NOx-Speicherkatalysator für die Reduktion von Stickoxiden, umfassend drei unterschiedlich zusammengesetzte katalytisch aktive Materialzonen. Auch in diesem Fall wurden Porosität und Porengröße nicht weiter untersucht, und kein Hinweis 25 auf die erfindungsgemäße Morphologie gegeben.

Es besteht dennoch Bedarf an Oxidationskatalysatoren, die wirkungsvoll über ihre gesamte Laufzeit vor einer Phosphorvergiftung geschützt sind. Die vorliegende Erfindung betrifft demnach einen Katalysator, der
- ein Trägersubstrat mit einem ersten Ende a und einem zweiten Ende b, sowie der Länge L,
- eine Materialzone A enthaltend ein Platingruppenmetall auf einem Trägermaterial mit einer Beladungsmenge von 40 bis 150g/l, bezogen auf das Volumen des Trägersubstrates und
- Materialzone B enthaltend ein Platingruppenmetall auf einem Trägermaterial mit einer Beladungsmenge von 75 bis 200 g/l, bezogen auf das Volumen des Trägersubstrates,
umfasst, wobei Materialzone B einen höheren Gehalt an Platingruppenmetall, bezogen auf das Volumen des Trägersubstrates und berechnet in g/l, aufweist als Materialzone A und wobei die Materialzone B einen Anteil an Poren mit einem Durchmesser von 0,5 bis 50 µm von 20 bis 30% aufweist.

Materialzone B enthält als Platingruppenmetall zum Beispiel nur Platin, nur Palladium oder Platin und Palladium. Platin und Palladium sind bevorzugt und zwar insbesondere in einem Gewichtsverhältnis von 20:1 bis 1:5, wobei ein Gewichtsverhältnis von 10:1 bis 1:3 bevorzugt ist.

In Materialzone B liegt das Platingruppenmetall insbesondere in Mengen von 0,53 bis 2,5 g/l, bevorzugt in Mengen von 0,60 bis 1,4 g/l, bezogen auf das Volumen des Trägersubstrates vor.

Materialzone B weist einen Anteil an Poren mit einem Durchmesser von 0,5 bis 50 µm von 20 bis 30% auf.

Als Porenanteil wird im Rahmen der vorliegenden Anmeldung das Porenvolumen bezogen auf das Gesamtvolumen verstanden. Somit bedeutet vorliegend zum Beispiel ein Porenanteil der Materialzone B von 20%, dass 20% des Gesamtvolumens der Materialzone B von Poren mit einem Durchmesser von 0,5 bis 50µm gebildet werden.

Der Porenanteil einer Materialzone bzw. eines Katalysatorbereiches kann mittels eines Verfahrens bestimmt werden, das die folgenden Schritte umfasst:
- Auswählen des zu untersuchenden Katalysatorbereiches,
- Erstellen eines Querschliffs des zu untersuchenden Katalysatorbereiches, bei dem die Poren mit einem organischen Harz gefüllt sind,
- Erstellen einer Aufnahme des Querschliffs mittels Rasterelektronenmikroskop (REM),
- Auswahl des zu untersuchenden Teilbereiches der REM-Aufnahme,
- Umwandlung des ausgewählten Teilbereiches der REM-Aufnahme in ein Binärbild mittels eines Bildanalyseprogramms und
- Durchführen einer Porositätsverteilungsberechnung anhand des Binärbildes mittels eines Bildanalyseprogramms und nachfolgende Bestimmung des Porenanteils.

Zur Herstellung eines Querschliffes eines Katalysatorbereiches, bei dem die Poren mit einem organischen Harz gefüllt sind, stehen dem Fachmann bekannte Querschliffverfahren zur Verfügung.

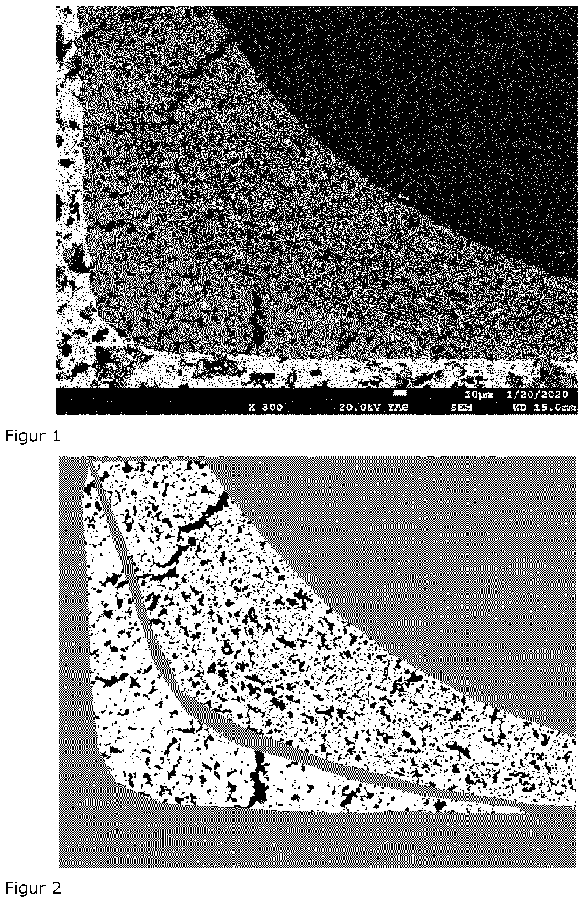

Die Herstellung einer Aufnahme des Querschliffs mittels Rasterelektronenmikroskop (REM) erfolgt ebenfalls nach bekannten und umfassend beschriebenen Verfahren. Die spezifischen Messbedingungen sind dabei unkritisch, d.h. haben keinen Einfluss auf das Endergebnis. Dabei wird als Abbildungsverfahren die Detektion von zurückgestreuten Primärelektronen benutzt. Diese zurückgestreuten Primärelektronen sorgen für eine Signalintensität, die von der mittleren Ordnungszahl des untersuchten Materials abhängt. Schwerere Elemente erscheinen also hell, weil sie stark zurückstreuen, leichtere Elemente erscheinen hingegen dunkler. Somit erscheinen im erhaltenen REM-Bild die Poren dunkelgrau bis schwarz, während die Materialien des Washcoats heller erscheinen. Abbildung 1 zeigt ein derart erstelltes REM-Bild des Katalysators des nachfolgenden Beispiels 1, auf dem der Träger und die beiden Materialzonen A und B leicht voneinander zu unterscheiden sind. Im nächsten Schritt wird der zu untersuchende Teilbereich oder auch mehrere zu untersuchende Teilbereiche des REM-Bildes, also etwa ein Bereich einer Materialzone, ausgewählt und durch ein Schwellenwertverfahren mit einer Bildanalyse-Software ein Binärbild erstellt. Die Bildanalyse-Software wurde im Rahmen der vorliegenden Erfindung mit Matlab Version 2019 und der dazugehörigen Image Processing Toolbox programmiert. Figur 2 zeigt ein mittels der Bildanalyse-Software erstelltes Binärbild, das aus der REM-Aufnahme der Figur 1 erstellt worden ist. Darin erscheinen die Poren schwarz und die Materialien des Washcoats weiß. Graue Bereiche sind nicht ausgewählte Bereiche, die nicht von Interesse sind. Anschließend werden mit der Bildanalyse-Software mittels morphologischer Bildbearbeitungsverfahren Porenanteile berechnet. Neben der oben beschriebenen mit Matlab programmierten Bildanalyse-Software stehen auch andere, dem Fachmann bekannte Programme zur Verfügung, so zum Beispiel das Programm ImageJ, die man mittels Programmierung von zum Beispiel Plugins nach Bedarf so anpassen kann, um eine Porenanalyse durchzuführen.

Das Trägermaterial in Materialzone B kann Aluminiumoxid, dotiertes Aluminiumoxid, Siliziumoxid, Magnesiumoxid, Titanoxid oder eine Mischung oder ein Mischoxid oder ein Kompositoxid von mindestens zwei dieser Materialien sein. Insbesondere ist es aber Aluminiumoxid.

Materialzone A enthält als Platingruppenmetall zum Beispiel nur Platin, nur Palladium oder Platin und Palladium. Platin und Palladium sind bevorzugt und zwar insbesondere in einem Gewichtsverhältnis von 20:1 bis 1:5, wobei ein Gewichtsverhältnis von 15:1 bis 1:1 bevorzugt ist.

In Materialzone A liegt das Platingruppenmetall insbesondere in Mengen von 0,18 bis 1,4 g/l, bevorzugt in Mengen von 0,25 bis 0,7 g/l, bezogen auf das Volumen des Trägersubstrates vor.

Das Platingruppenmetall in Materialzone A liegt auf einem Trägermaterial vor. Als Trägermaterial kommen alle dem Fachmann für diesen Zweck geläufigen Materialien in Betracht. Es weist insbesondere eine BET-Oberfläche von 30 bis 250 m²/g, bevorzugt von 100 bis 200 m²/g auf (bestimmt nach DIN 66132) und ist bevorzugt ausgewählt aus der Gruppe bestehend aus Aluminiumoxid, dotiertes Aluminiumoxid, Siliziumoxid, Magnesiumoxid, Titanoxid und einer Mischung oder eines Mischoxids oder Kompositoxids von mindestens zwei dieser Materialien.

Bevorzugt sind Aluminiumoxid, Magnesium/Aluminium-Mischoxide und Aluminium/Silizium-Mischoxide.

Daneben kann auch Aluminiumoxid verwendet werden, das mit beispielsweise mit 1 bis 10 Gew.-%, insbesondere 3 bis 6 Gew.-%, Lanthanoxid dotiert ist.

Der Porenanteil der Materialzone A ist unkritisch. Bevorzugt weist Materialzone A einen Anteil an Poren mit einem Durchmesser von 0,5 bis 50µm von 10 bis 30% auf.

Im erfindungsgemäßen Oxidationskatalysator ist die Beladung mit Materialzone B bevorzugt höher als die Beladung mit Materialzone A, jeweils in g/l und bezogen auf das Volumen des Trägersubstrates.

Bevorzugt beträgt die Beladung der Materialzone B 75 bis 150 g/l. Die Beladung der Materialzone A beträgt bevorzugt 50 bis 75 g/l.

Die Materialzonen A und B können auf dem Trägersubstrat in verschiedener Weise angeordnet sein.

In einer bevorzugten Ausführungsform ist Materialzone A über die gesamte Länge L des Trägersubstrates beschichtet, während Materialzone B sich ausgehend vom ersten Ende a des Trägersubstrates über 20 bis 80%, bevorzugt 30 bis 70%, der Länge L erstreckt und sich auf der Materialzone A befindet.

In einer weiteren bevorzugten Ausführungsform erstreckt sich Materialzone A ausgehend vom zweiten Ende des Trägersubstrates über 40 bis 60% der Länge L, während sich Materialzone B ausgehend vom ersten Ende des Trägersubstrates über 40 bis 60% der Länge L erstreckt, wobei $L = {L}_{A} + {L}_{B}$ oder $L < {L}_{A} + {L}_{B}$ oder $L > {L}_{A} + {L}_{B}$ gilt, wobei L_{A} die Länge der Materialzone A und L_{B} die Länge der Materialzone B ist.

Der Fall L > L_{A} + L_{B} bedeutet, dass ein Teil des Tragkörpers frei von Beschichtungen bleibt. Insbesondere bleibt in diesem Fall zwischen den Materialzonen A und B ein Spalt, der mindestens 0,5 cm lang ist, also beispielsweise 0,5 bis 1 cm.

Der erfindungsgemäße Katalysator umfasst einen Tragkörper. Dieser ist insbesondere ein Durchflusssubstrat, kann aber auch ein Wandflussfilter sein.

Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an seinen beiden Enden offen sind.

Wandflussfilter weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

Erfindungsgemäße Katalysatoren können nach dem Fachmann geläufigen Methoden hergestellt werden, so etwa nach den üblichen Tauchbeschichtungsverfahren bzw. Pump- und Saug-Beschichtungsverfahren mittels eines Washcoats, d.h. einer wässrigen Suspension der Bestanteile, die die jeweilige Materialzone bilden. Gegebenenfalls schließt sich eine thermische Nachbehandlung (Kalzination) an.

Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der der zu beschichtenden Materialien klein genug sein, um in die Poren des Wandflussfilters einzudringen.

In einer weiteren Ausführungsform der vorliegenden Erfindung wird ein Trägersubstrat verwendet, das aus gewellten Blättern aus inerten Materialien aufgebaut ist. Solche Trägersubstrate sind dem Fachmann als "corrugated substrate" bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige Materialien hitzebeständig und bestehen aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.

Substrate aus gewellten Blättern können direkt mit den Materialzonen A und B beschichtet werden, vorzugsweise werden sie aber zunächst mit einem inerten Material, zum Beispiel Titandioxid, und erst dann mit dem katalytischen Material beschichtet.

Der erfindungsgemäße Katalysator eignet sich in hervorragender Weise zur Oxidation von Kohlenmonoxid, Kohlenwasserstoffen, sowie Stickstoffmonoxid im Abgas von Dieselmotoren. Dabei ist er weit weniger für eine Vergiftung durch Phosphorverbindungen anfällig als bisher bekannte Katalysatoren.

Die vorliegende Erfindung betrifft auch ein Verfahren zur Reinigung von Abgasen von Kraftfahrzeugen, die mit mager betriebenen Motoren, etwa Dieselmotoren, betrieben werden, das dadurch gekennzeichnet ist, dass das Abgas über einen erfindungsgemäßen Katalysator geleitet wird, wobei das Abgas am ersten Ende a des Trägersubstrates in den Katalysator ein- und am zweiten Ende b wieder austritt.

### Beispiel 1

a) Ein handelsübliches rundes Durchflusssubstrat aus Cordierit der Abmessungen 5,66"x4,00" mit der Zelligkeit 400 cpsi und der Wandstärke 4 mil wurde über seine gesamte Länge mit einem Washcoat beschichtet, der 0,353 g/l Platin und Palladium in einem Masseverhältnis von 12:1, geträgert auf einem handelsüblichen mit 5% Siliziumoxid dotiertem Aluminiumoxid, enthielt. Die Washcoatbeladung betrug 60 g/l. Der Porenanteil bestimmt nach dem oben beschriebenen Verfahren (siehe auch Figuren 1 und 2) betrug 15%.
b) Der in Schritt a) erhaltene Katalysator wurde in einem zweiten Schritt ausgehend von einem Ende auf 75% seiner Länge mit einem Washcoat beschichtet, der 0,79 g/l Platin und Palladium in einem Massenverhältnis von 1:1 geträgert auf einem hochporösen Aluminiumoxid enthielt. Die Washcoatbeladung betrug 110 g/l. Der Porenanteil (Poren mit einem Durchmesser von 0,5 bis 50µm) der im zweiten Schritt aufgetragenen Schicht, bestimmt nach dem oben beschriebenen Verfahren (siehe auch Figuren 1 und 2) betrug 24%.

Der erhaltene Katalysator wird nachstehend als K1 bezeichnet.

### Beispiel 2

a) Ein handelsübliches rundes Durchflusssubstrat aus Cordierit der Abmessungen 5,66"x4,00" mit der Zelligkeit 400 cpsi und der Wandstärke 4 mil wurde über 50% seiner Länge mit einem Washcoat beschichtet, der 0,353 g/l Platin und Palladium in einem Masseverhältnis von 12:1, geträgert auf einem handelsüblichen mit 5% Siliziumoxid dotiertem Aluminiumoxid, enthielt. Die Washcoatbeladung betrug 60 g/l. Der Porenanteil bestimmt nach dem oben beschriebenen Verfahren betrug 15%.
b) Der in Schritt a) erhaltene Katalysator wurde in einem zweiten Schritt ausgehend von dem unbeschichteten Ende über 50% seiner Länge mit einem Washcoat beschichtet, der 1,4 g/l Platin und Palladium in einem Massenverhältnis von 1:1 geträgert auf einem hochporösen Aluminiumoxid enthielt. Die Washcoatbeladung betrug 75 g/l. Der Porenanteil (Poren mit einem Durchmesser von 0,5 bis 50µm) der im zweiten Schritt aufgetragenen Schicht bestimmt nach dem oben beschriebenen Verfahren betrug 24%.

Der erhaltene Katalysator wird nachstehend als K2 bezeichnet.

### Vergleichsbeispiel 1

Beispiel 1 wurde wiederholt mit dem Unterschied, dass in Schritt b) die Washcoatbeladung nur 60g/l betrug.

Der erhaltene Katalysator wird nachstehend als VK1 bezeichnet.

### Vergleichsbeispiel 2

a) Ein handelsübliches rundes Durchflusssubstrat aus Cordierit der Abmessungen 5,66"x4,00" mit der Zelligkeit 400 cpsi und der Wandstärke 4 mil wurde über 50% seiner Länge mit einem Washcoat beschichtet, der 0,353 g/l Platin und Palladium in einem Masseverhältnis von 3:1, geträgert auf einem handelsüblichen mit 5% Siliziumoxid dotiertem Aluminiumoxid, enthielt. Die Washcoatbeladung betrug 100 g/l. Der Porenanteil (Poren mit einem Durchmesser von 0,5 bis 50µm) bestimmt nach dem oben beschriebenen Verfahren betrug 15%.
b) Der in Schritt a) erhaltene Katalysator wurde in einem zweiten Schritt ausgehend von dem unbeschichteten Ende über 50% seiner Länge mit einem Washcoat beschichtet, der 1,4 g/l Platin und Palladium in einem Massenverhältnis von 3:1 geträgert auf einem hochporösen Aluminiumoxid enthielt. Die Washcoatbeladung betrug 100 g/l. Der Porenanteil (Poren mit einem Durchmesser von 0,5 bis 50µm) der im zweiten Schritt aufgetragenen Schicht bestimmt nach dem oben beschriebenen Verfahren betrug 15%.

Der erhaltene Katalysator wird nachstehend als VK2 bezeichnet.

### Vergleichstests

a) Die Katalysatoren K1, K2, VK1 und VK2 wurden für 50 Stunden bei 650°C bei der Luftfeuchtigkeit von 7% gealtert.
b) Die gealterten Katalysatoren wurden für 10, 20,30 und 40 Stunden an einem Motorprüfstand gealtert, indem dem Kraftstoff ein Phosphorenthaltendes Öladditiv zugegeben war. Die Zugabe an Öladditiv war auf eine Exposition von 0,6 g/l P pro Stunde berechnet.
c) Für die gemäß Schritt b) mit Phosphor behandelten Katalysatoren wurde der Zeitpunkt bestimmt, bei dem beaufschlagter Kohlenwasserstoff nicht mehr oxidiert wird, sondern durchschlägt (THC Slip). Dazu wurde bei allen Katalysatoren die gleiche Menge an Diesel dosiert um eine Exothermie zu generieren und dabei der HC-Slip gemessen. Ebenso wurde gemessen, ob die Zieltemperatur von 575°C erreicht wird.
d) Ergebnisse

| | HC Schlupf ohne P-Exposition [ppm] | HC Schlupf bei 6g/L P-Exposition [ppm] | HC Schlupf bei 12g/L P-Exposition [ppm] | HC Schlupf bei 18g/L P-Exposition [ppm] | HC Schlupf bei 24g/L P-Exposition [ppm] | Quenchtemperatur [°C] |
|---|---|---|---|---|---|---|
| K1 | 1500 | 2000 | 2800 | 3800 | 5000 | Zieltemperatur 575 erreicht |
| VK1 | 1400 | 2200 | 4500 | 7500; Quench | | 525 |
| K2 | 1000 | 2000 | 5000; Quench | | | 540 |
| VK2 | 1200 | 2400 | 8000; Quench | | 8000 | 490 |

| | | | | | | |
|---|---|---|---|---|---|---|
| K1 erreicht als einziger Katalysator die Zieltemperatur von 575°C mit einer Exposition von 24g/L. VK1 mit einer geringeren Washcoat-Beladung in Materialzone B erreicht nur noch 525 °C im Test, bereits bei 18g/L. K2 ist im Vergleich zu VK2 resistenter gegen Phosphor und verlöscht erst bei 12g/L P bei 540°C mit einen HC-Durchbruch von 5000ppm, wohingegen VK2 bei dieser Exposition bei 490°C verlöscht mit 8000ppm HC Durchbruch. | | | | | | |

## Patentansprüche

1. Katalysator, der
• ein Trägersubstrat mit einem ersten Ende a und einem zweiten Ende b, sowie der Länge L,
• eine Materialzone A enthaltend ein Platingruppenmetall auf einem Trägermaterial mit einer Beladungsmenge von 40 bis 150g/l, bezogen auf das Volumen des Trägersubstrates und
• Materialzone B enthaltend ein Platingruppenmetall auf einem Trägermaterial mit einer Beladungsmenge von 75 bis 200 g/l, bezogen auf das Volumen des Trägersubstrates,
umfasst, wobei Materialzone B einen höheren Gehalt an Platingruppenmetall, bezogen auf das Volumen des Trägersubstrates und berechnet in g/l, aufweist als Materialzone A und wobei die Materialzone B einen Anteil an Poren mit einem Durchmesser von 0,5 bis 50 µm von 20 bis 30% aufweist.

2. Katalysator gemäß Anspruch 1, **dadurch gekennzeichnet, dass** Materialzone A als Platingruppenmetall Platin und Palladium enthält.

3. Katalysator gemäß Anspruch 2, **dadurch gekennzeichnet, dass** das Gewichtsverhältnis von Platin und Palladium in Materialzone A 20:1 bis 1:5 ist.

4. Katalysator gemäß einem oder mehreren der Ansprüche 1 bis 3, **dadurch gekennzeichnet, dass** das Platingruppenmetall in Materialzone A in Mengen von 0,18 bis 0,53 g/l, bezogen auf das Volumen des Trägersubstrates, vorliegt.

5. Katalysator gemäß einem oder mehreren der Ansprüche 1 bis 4, **dadurch gekennzeichnet, dass** Materialzone B als Platingruppenmetall Platin und Palladium enthält.

6. Katalysator gemäß Anspruch 5, **dadurch gekennzeichnet, dass** das Gewichtsverhältnis von Platin und Palladium in Materialzone B 20:1 bis 1:5 ist.

7. Katalysator gemäß einem oder mehreren der Ansprüche 1 bis 6, **dadurch gekennzeichnet, dass** das Platingruppenmetall in Materialzone B in Mengen von 0,53 bis 1,06 g/l, bezogen auf das Volumen des Trägersubstrates, vorliegt.

8. Katalysator gemäß einem oder mehreren der Ansprüche 1 bis 7, **dadurch gekennzeichnet, dass** Materialzone A über die gesamte Länge L des Trägersubstrates beschichtet ist, während Materialzone B sich ausgehend vom ersten Ende a des Trägersubstrates über 40 bis 80% der Länge L erstreckt und sich auf der Materialzone A befindet.

9. Katalysator gemäß einem oder mehreren der Ansprüche 1 bis 8, **dadurch gekennzeichnet, dass** das Trägersubstrat ein Durchflusssubstrat ist.

10. Katalysator gemäß einem oder mehreren der Ansprüche 1 bis 9, **dadurch gekennzeichnet, dass** der Porenanteil nach einem Verfahren bestimmt wird, das die folgenden Schritte umfasst:
• Auswählen des zu untersuchenden Katalysatorbereiches,
• Erstellen eines Querschliffs des zu untersuchenden Katalysatorbereiches, bei dem die Poren mit einem organischen Harz gefüllt sind,
• Erstellen einer Aufnahme des Querschliffs mittels Rasterelektronenmikroskop (REM),
• Auswahl des zu untersuchenden Teilbereiches der REM-Aufnahme,
• Umwandlung des ausgewählten Teilbereiches der REM-Aufnahme in ein Binärbild mittels eines Bildanalyseprogramms und
• Durchführen einer Porositätsverteilungsberechnung anhand des Binärbildes mittels eines Bildanalyseprogramms und nachfolgende Bestimmung des Porenanteils.

11. Verfahren zur Reinigung von Abgasen von Kraftfahrzeugen, die mit mager betriebenen Motoren betrieben werden, **dadurch gekennzeichnet, dass** das Abgas über einen Katalysator gemäß einem oder mehreren der Ansprüche 1 bis 10 geleitet wird, wobei das Abgas am ersten Ende a des Trägersubstrates in den Katalysator ein- und am zweiten Ende b wieder austritt.

## Claims

1. A catalyst comprising
• a support substrate having a first end a and a second end b, and a length L,
• a material zone A containing a platinum group metal on a support material with a loading of 40 to 150 g/l, based on the volume of the support substrate; and
• a material zone B comprising a platinum group metal on a support material
with a loading of 75 to 200 g/l, based on the volume of the support substrate, wherein material zone B has a higher content of platinum group metal, based on the volume of the support substrate and calculated in g/l, than material zone A, and wherein material zone B has a proportion of pores with a diameter of 0.5 to 50 µm of 20 to 30 per cent.

2. A catalyst according to claim 1, **characterised in that** material zone A contains platinum and palladium as platinum group metals.

3. A catalyst according to claim 2, **characterised in that** the weight ratio of platinum to palladium in material zone A is 20:1 to 1:5.

4. A catalyst according to one or more of claims 1 to 3, **characterised in that** the platinum group metal is present in material zone A in amounts of 0.18 to 0.53 g/l, based on the volume of the support substrate.

5. A catalyst according to one or more of claims 1 to 4, **characterised in that** material zone B contains platinum and palladium as platinum group metals.

6. A catalyst according to claim 5, **characterised in that** the weight ratio of platinum to palladium in material zone B is 20:1 to 1:5.

7. A catalyst according to one or more of claims 1 to 6, **characterised in that** the platinum group metal is present in material zone B in amounts of 0.53 to 1.06 g/l, based on the volume of the support substrate.

8. A catalyst according to one or more of claims 1 to 7, **characterised in that** material zone A is coated over the entire length L of the support substrate, whilst material zone B extends from the first end a of the support substrate over 40 to 80 per cent of the length L and is located on top of material zone A.

9. A catalyst according to one or more of claims 1 to 8, **characterised in that** the support substrate is a flow-through substrate.

10. A catalyst according to one or more of claims 1 to 9, **characterised in that** the porosity is determined by a method comprising the following steps:
• selecting the catalyst region to be examined,
• preparing a cross-section of the catalyst region to be examined, in which the pores are filled with an organic resin,
• taking an image of the cross-section using a scanning electron microscope (SEM),
• selecting the sub-area of the SEM image to be examined,
• converting the selected sub-area of the SEM image into a binary image using an image analysis programme, and
• Performing a porosity distribution calculation based on the binary image using an image analysis programme, followed by the determination of the pore fraction.

11. A method for purifying exhaust gases from motor vehicles powered by lean-burn engines, **characterised in that** the exhaust gas is passed through a catalytic converter in accordance with one or more of claims 1 to 10, wherein the exhaust gas enters the catalytic converter at the first end a of the carrier substrate and exits again at the second end b.

## Revendications

1. Catalyseur comprenant :
• un substrat porteur présentant une première extrémité a et une deuxième extrémité b, ainsi qu'une longueur L,
• une zone de matériau A comprenant un métal du groupe platine sur un matériau de support selon une charge de 40 à 150 g/l par rapport au volume du substrat porteur, et
• une zone de matériau B comprenant un métal du groupe platine sur un matériau de support selon une charge de 75 à 200 g/l par rapport au volume du substrat porteur,
ladite zone de matériau B présentant une teneur plus élevée en métal du groupe platine, par rapport au volume du substrat porteur et calculée en g/l, que ladite zone de matériau A, et ladite zone de matériau B présentant une proportion de pores d'un diamètre de 0,5 à 50 µm qui est de 20 à 30 %.

2. Catalyseur selon la revendication 1, **caractérisé en ce que** la zone de matériau A contient du platine et du palladium comme métal du groupe platine.

3. Catalyseur selon la revendication 2, **caractérisé en ce que** le rapport pondéral entre le platine et le palladium dans la zone de matériau A est de 20 : 1 à 1 : 5.

4. Catalyseur selon une ou plusieurs des revendications 1 à 3, **caractérisé en ce que** le métal du groupe platine est présent dans la zone de matériau A en quantités allant de 0,18 à 0,53 g/l par rapport au volume du substrat porteur.

5. Catalyseur selon une ou plusieurs des revendications 1 à 4, **caractérisé en ce que** la zone de matériau B contient du platine et du palladium comme métal du groupe platine.

6. Catalyseur selon la revendication 5, **caractérisé en ce que** le rapport pondéral entre le platine et le palladium dans la zone de matériau B est de 20 : 1 à 1 : 5.

7. Catalyseur selon une ou plusieurs des revendications 1 à 6, **caractérisé en ce que** le métal du groupe platine est présent dans la zone de matériau B en quantités allant de 0,53 à 1,06 g/l par rapport au volume du substrat porteur.

8. Catalyseur selon une ou plusieurs des revendications 1 à 7, **caractérisé en ce que** la zone de matériau A forme un revêtement sur toute la longueur L du substrat porteur, tandis que la zone de matériau B s'étend, à partir de la première extrémité a du substrat porteur, sur 40 à 80 % de la longueur L et se situe sur la zone de matériau A.

9. Catalyseur selon une ou plusieurs des revendications 1 à 8, **caractérisé en ce que** le substrat porteur est un substrat à écoulement traversant.

10. Catalyseur selon une ou plusieurs des revendications 1 à 9, **caractérisé en ce que** la proportion de pores est déterminée selon un procédé comprenant les étapes suivantes :
• sélection de la zone de catalyseur à examiner,
• réalisation d'une section transversale de la zone de catalyseur à examiner dans laquelle les pores sont remplis d'une résine organique,
• réalisation d'un cliché de la section transversale au moyen d'un microscope électronique à balayage (MEB),
• sélection de la zone partielle du cliché MEB à examiner,
• transformation de la zone partielle du cliché MEB sélectionnée en une image binaire au moyen d'un programme d'analyse d'images, et
• réalisation d'un calcul de répartition de la porosité à partir de l'image binaire au moyen d'un programme d'analyse d'images puis détermination de la proportion de pores.

11. Procédé de nettoyage des gaz d'échappement de véhicules à moteur à mélange pauvre, **caractérisé en ce que** les gaz d'échappement passent par un catalyseur selon une ou plusieurs des revendications 1 à 10, lesdits gaz d'échappement entrant dans le catalyseur par la première extrémité a du substrat porteur et en ressortant par la deuxième extrémité b.
